# FASCICULE DE BREVET EUROPEEN

(11) **EP 1 662 166 B1**
(45) Date de publication et mention de la délivrance du brevet: **09.01.2008**
(21) Numéro de dépôt: 05024519.0
(22) Date de dépôt: 10.11.2005
(51) Int. Cl.: F16F 7/10, B64C 27/06

(54) **Dispositif de filtrage de vibrations entre deux pièces et applications**
Vorrichtung zum Filtern von Schwingungen zwischen zwei Körpern und Anwendungen
Device for filtering vibrations between two parts and applications

(30) Priorité: 30.11.2004 FR 0412715
(43) Date de publication de la demande: 31.05.2006
(73) Titulaire: EUROCOPTER, 13725 Marignane Cédex (FR)
(72) Inventeur: Bietenhader, Claude, 13410 Lambesc (FR)
(74) Mandataire: Renaud-Goud, Thierry

(56) Documents cités:
- FR-A- 2 787 161
- US-A- 4 085 825
- US-A- 4 420 134

## Description

La présente invention concerne un dispositif de filtrage de vibrations entre deux pièces ainsi que les applications dudit dispositif de filtrage.

Plus particulièrement, un tel dispositif est destiné à assurer une liaison élastique entre deux pièces pour la transmission de l'une à l'autre des efforts statiques dans l'axe du dispositif et filtrer simultanément les efforts dynamiques coaxiaux associés transmis de l'une des pièces à l'autre pièce.

Bien que ledit dispositif puisse être utilisé dans toutes les situations dans lesquelles il importe de filtrer des vibrations transmises entre deux pièces, il s'applique notamment au perfectionnement d'un dispositif de suspension pour un aéronef d'une boîte de transmission d'un couple moteur à un organe entraîné et, en particulier d'une boîte de transmission principale d'un hélicoptère.

On sait que les problèmes de vibrations sur l'hélicoptère se présentent de façon très spécifique. En effet, le rotor principal pour la sustentation et la propulsion de l'hélicoptère constitue de façon naturelle un puissant générateur de vibrations transmises au fuselage et dont le niveau conditionne, d'une part le confort dans l'habitacle et les vibrations des commandes et, d'autre part, le niveau des contraintes mécaniques dynamiques dans toute la machine. Par suite, les contraintes dynamiques affectent la tenue en fatigue des pièces et des différents équipements et par conséquent la durée de vie de l'ensemble des éléments constituant l'hélicoptère.

De nombreuses recherches ont été menées pour atténuer, à défaut de l'annuler complètement, ce niveau vibratoire inhérent au fonctionnement même du rotor qui non seulement transmet au moyeu des efforts et des moments statiques ou quasi-statiques créés par :
- la portance (perpendiculaire au plan du rotor),
- la traînée (dans le plan du rotor et parallèle à la composante V_{H'} normale au mât-rotor, de la vitesse d'avancement de l'appareil),
- la force de dérive (perpendiculaire aux deux précédentes et également dans le plan du rotor) qui reste faible et qui peut généralement être négligée,
mais également des efforts et des moments périodiques provenant des dissymétries aérodynamiques (portance et traînée de profil) qui apparaissent au cours de la rotation des pales, essentiellement dues à la vitesse d'avancement en vol de translation à grande vitesse, ou encore des dissymétries résultant de l'inégalité de répartition des vitesses induites sur le disque du rotor à faible vitesse (zone de transition). Ces efforts et moments aérodynamiques alternés sont transmis au centre du rotor après avoir été naturellement atténués ou amplifiés par les pales.

En désignant d'une façon générale par Ω le régime de rotation du rotor exprimé en nombre de tours par seconde et par b le nombre de pales, il est rappelé que :
- les efforts (dus aux mouvements de battement des pales) et les moments (dus aux mouvements de traînée des pales) dont les axes sont portés par l'axe du rotor, ne sont transmis au mât et au fuselage que si leur fréquence, exprimée en hertz (Hz), est un harmonique de bΩ, donc de la forme kb Ω (k : entier positif, égal ou supérieur à 1), le transfert de ces efforts et moments des axes tournants aux axes fixes s'effectuant sans changement de fréquence (effets de pompage et de torsion dans la structure) ;
- les efforts (dus aux mouvements de traînée des pales) et les moments (dus aux mouvements de battement des pales) dont les axes sont dans le plan du rotor, ne sont transmis au mât et au fuselage que si leur fréquence est de la forme (kb±1)Ω, les efforts et moments résultants étant alors à la fréquence kbΩ en axes fixes (effets de roulis et de tangage, tamis transversal ou longitudinal, principalement en bΩ).

Quelle que soit l'origine de l'excitation, on constate donc qu'un rotor bien équilibré ne transmet au fuselage, outre les efforts et les moments statiques, que des efforts et des moments dynamiques qui sont des harmoniques de bΩ (k = 1, 2, 3, ...) et, dans la plupart des cas, l'excitation sur le premier harmonique b Ω est prépondérante.

En pratique, les vibrations les plus gênantes et les plus pénalisantes dans le fuselage sont les vibrations dans les plans sensiblement verticaux. Par conséquent, les dispositifs destinés à filtrer la transmission des vibrations entre le rotor et le fuselage d'un hélicoptère sont conçus de façon à minimiser, si ce n'est annuler, le torseur suivant :
- un effort dynamique sensiblement vertical, encore dit en « pompage »,
- les moments dynamiques en tangage (ou en « longitudinal » et en roulis (ou en « latéral »).

Par le brevet FR 2 499 505 de la demanderesse, on connaît un dispositif de suspension de la boîte de transmission principale d'un hélicoptère permettant de filtrer de façon efficace, ces vibrations engendrées par le rotor principal de sustentation et de propulsion.

A cet effet, le dispositif décrit dans ce document est du type comportant une platine de suspension qui est située sensiblement dans un plan perpendiculaire à l'axe du rotor et dont la partie centrale est solidaire du fond de la boîte de transmission, et un jeu d'au moins trois barres de soutien dont les extrémités supérieures sont reliées à la boite de transmission en partie haute et les extrémités inférieures articulées aux extrémités extérieures de bras disposés radialement autour de l'embase de la boîte de transmission, à laquelle ils sont reliés ainsi que, dans la région de leurs extrémités extérieures, au fuselage en un point fort de celui-ci, les diverses liaisons de chaque bras radial lui permettant des débattements par déformation dans le plan radial qui le contient, tandis que ces débattements impriment des déplacements importants à un moyen résonateur constitué par une masse battante montée à l'extrémité d'une lame servant de support dont l'autre extrémité est solidaire du bras radial correspondant. Par ailleurs, la platine de suspension est indépendante des bras radiaux et est constituée par une membrane en tôle mince déformable en flexion sous les efforts exercés perpendiculairement à son plan et/ou des moments de pivotement exercés autour de son centre par la boîte de transmission, mais rigide en traction/compression et en cisaillement sous des efforts et des moments exercés dans son plan tels que le couple de réaction d'entraînement du rotor, cette membrane s'intégrant à la structure supérieure du fuselage.

Bien que particulièrement efficace, ledit dispositif de suspension connu présente certains inconvénients et notamment :
- son accessibilité est limitée et son encombrement est important, en particulier en raison de la présence des moyens résonateurs précités ; et
- son coût est élevé, notamment en raison de l'agencement même pour permettre le fonctionnement efficace des lames de suspension et des supports de masse.

Par le document FR 2 787 161, on connaît un dispositif antivibratoire susceptible d'être monté entre la boîte de transmission principale et le fuselage d'un hélicoptère, pour filtrer la transmission de vibrations entre les deux.

En particulier, ce dispositif antivibratoire permet la suppression des masses battantes telles que précitées et peut être mis en lieu et place de chacune des barres de soutien susmentionnées.

A cet effet, ce dispositif connu de filtrage de vibrations comporte :
- un élément annulaire élastique, qui est relié d'une part à la partie haute de la boîte de transmission et d'autre part au fuselage de manière à servir de liaison entre ces derniers et qui est susceptible d'être déformé sous l'action de vibrations engendrées par le rotor principal ; et
- un moyen résonateur, relié par l'intermédiaire d'au moins deux lames qui sont souples en flexion et rigides en traction et en compression, à la face interne dudit élément annulaire, de manière à être mis en rotation oscillante lors d'une déformation dudit élément annulaire, produite par l'action desdites vibrations de sorte que, par cette mise en rotation oscillante, ledit moyen résonateur engendre un effort d'inertie antivibratoire qui s'oppose auxdites vibrations et réduit ainsi leur transmission du rotor au fuselage.

Toutefois, ce dispositif antivibratoire connu présente également certains inconvénients :
- sa masse est significative car le moyen résonateur comprend des masses battantes reliées à l'élément annulaire par des supports rigides travaillant en flexion et des lames souples en flexion et rigides en traction, et en compression. Les sollicitations en flexion des supports conduisent à un dimensionnement important et par suite à une masse élevée desdits supports, généralement en acier ;
- les lames souples sont relativement fragiles en raison de leur mode de fonctionnement, en particulier à cause des sollicitations importantes dues aux efforts et aux moments dynamiques mais aussi à cause des sollicitations statiques, ce qui peut entraîner des durées de vie réduites pour ces lames ;
- son rapport d'amplification λ, caractérisant l'efficacité du dispositif, est contenu dans des limites réduites.

La présente invention a pour objet de remédier à ces inconvénients. Elle concerne un dispositif de filtrage de vibrations à coût et encombrement réduits, particulièrement simple et fiable, permettant de réduire de façon efficace la transmission de vibrations entre deux pièces et notamment entre deux tronçons d'une barre, par exemple une barre de liaison entre deux éléments vibrants, ledit dispositif antivibratoire pouvant notamment être utilisé pour perfectionner un dispositif de suspension d'une boîte de transmission d'un aéronef à voilure tournante et filtrer notamment les vibrations en pompage.

A cet effet, selon l'invention, ledit dispositif est remarquable en ce qu'il comporte :
- au moins une première platine élastique qui assure la liaison entre lesdites deux pièces en deux points de fixation définissant un axe géométrique YY et qui est localement déformable sous l'action de vibrations transmises par l'une desdites deux pièces à l'autre pièce,
- au moins un premier résonateur équipé de deux paliers lamifiés élastomériques, lesquels d'une part définissent un axe géométrique XX sensiblement perpendiculaire à l'axe géométrique YY et d'autre part reçoivent respectivement un moyen de fixation à ladite première platine élastique de manière à mettre en rotation oscillante ledit résonateur lors d'une déformation locale de ladite première platine pour générer un torseur d'inertie antivibratoire qui, en opposition auxdites vibrations, filtre leur transmission d'une pièce à l'autre.

Dans un mode de réalisation avantageux pour assurer une rigidité suffisante pour supporter la transmission des efforts statiques et disposer d'une souplesse locale pour permettre le filtrage des vibrations entre deux pièces, le dispositif comprend, selon l'invention :
- une première et une deuxième platines élastiques sensiblement identiques, disposées parallèlement l'une à l'autre en vis-à-vis, qui assurent la liaison entre lesdites deux pièces et qui sont localement déformables de façon sensiblement identique sous l'action de vibrations transmises par l'une desdites deux pièces à l'autre pièce,
- un premier résonateur équipé de deux paliers lamifiés élastomériques recevant respectivement un moyen de fixation auxdites première et deuxième platines élastiques de manière à mettre en rotation oscillante ledit résonateur lors d'une déformation desdites platines pour générer un torseur d'inertie antivibratoire qui, en opposition auxdites vibrations, filtre leur transmission d'une pièce à l'autre.

Ainsi, lors de la transmission de vibrations, les deux platines élastiques se déforment localement de manière sensiblement identique et entraînent le résonateur en rotation grâce notamment aux déformations angulaires et radiales des paliers lamifiés élastomériques. Par cette mise en rotation, le résonateur génère un torseur d'inertie antivibratoire exercé sur lesdites deux platines par l'intermédiaire des deux paliers lamifiés élastomériques de façon à filtrer, voire à annuler, la transmission des vibrations d'une pièce à l'autre.

De façon préférentielle, chacun de ces deux paliers lamifiés élastomériques comporte deux éléments distincts constituant des demi paliers de forme conique pour assurer les meilleures conditions de fonctionnement, chaque élément conique étant convergent l'un vers l'autre et centré sur l'axe de liaison correspondant des deux platines au résonateur. A noter qu'il pourrait en être de même pour tout palier lamifié élastomérique destiné à la liaison d'un nombre quelconque de platines à un nombre quelconque de résonateurs.

Avantageusement, chaque platine constitue un seul élément qui comporte au moins les parties suivantes :
- deux bras externes rigides, opposés l'un par rapport à l'autre, chaque bras externe étant conformé à son extrémité extérieure en forme d'une première chape,
- lesdits deux bras externes sont liés par deux premières extensions élastiques formées dans le plan de ladite platine, chaque première extension assurant la liaison du sommet extérieur de chaque bras externe au sommet intérieur de l'autre bras,
- chaque bras externe comporte une deuxième extension interne dans le plan de ladite platine, comprise entre les deux premières extensions élastiques, chaque deuxième extension interne ayant l'aspect d'un triangle avec un sommet arrondi de telle manière que les sommets arrondis de chaque deuxième extension de chaque bras externe de ladite platine sont en face l'un de l'autre et sans contact, ce qui détermine une ouverture dans la zone centrale du dispositif,
- chaque deuxième extension interne est conformée au niveau dudit sommet arrondi en forme d'une deuxième chape.

Par conséquent, un espace étant ménagé entre chacune des deux platines (sensiblement identiques et en vis-à-vis) pour y mettre en place le résonateur, lesdites premières chapes (au nombre de quatre : une à chaque extrémité extérieure de chaque bras de chaque platine) et lesdites deuxièmes chapes (au nombre de quatre : une au niveau de chacun des deux sommets arrondis de chaque platine) sont telles que :
- les alésages en vis-à-vis de chacune des deux premières chapes en vis-à-vis de chaque bras constituent deux paliers doubles, chaque palier double supportant un axe de liaison avec ladite pièce correspondante,
- les alésages en vis-à-vis de chacune des deux deuxièmes chapes en vis-à-vis de chaque platine constituent deux paliers doubles, chaque palier double supportant un axe de liaison avec le résonateur.

De façon avantageuse, chacune des extensions élastiques de chaque platine crée un assouplissement local réalisé sous la forme de fentes, parallèles entre elles et ayant une direction sensiblement perpendiculaire à l'axe géométrique YY passant par chacune des fixations desdites deux pièces audit dispositif.

Ainsi, chaque extension élastique se présente sous la forme de plusieurs lames parallèles reliant le sommet extérieur de chaque bras externe au sommet intérieur de l'autre bras externe.

De préférence, les lames élastiques parallèles délimitent des fentes de longueur identique. De cette façon, lesdites lames ont une raideur identique et l'ensemble des lames se comporte alors comme autant de ressorts identiques en parallèle, ce qui homogénéise les contraintes et facilite le dimensionnement.

Par conséquent, on note que chaque platine peut se déformer sensiblement selon l'axe géométrique passant par chacune des fixations desdites deux pièces audit dispositif sous l'action des vibrations transmises par l'une des pièces à l'autre. Ces déformations dynamiques de faible amplitude (quelques millimètres pour une application à l'hélicoptère) entraînent en rotation oscillante le résonateur, ce qui « casse » les vibrations transmises d'une pièce à une autre à la manière d'un ressort en opposition à une excitation.

Par ailleurs, la pluralité de lames constituant chaque extension élastique confère un caractère « Fail Safe » (selon la dénomination anglaise) au dispositif, c'est-à-dire que dans le cas peu probable de la rupture d'une lame, la seule conséquence est une baisse de la réduction du filtrage des vibrations et donc corrélativement une réduction de l'efficacité du dispositif antivibratoire, le dispositif assurant encore la liaison entre lesdites deux pièces. On comprend donc tout l'intérêt que présente cette redondance de lames en matière de sécurité.

De même, il se fait par construction que, d'une part chaque platine présente une Inertie importante par rapport à son axe principal de flexion et que, d'autre part les axes de liaison des deux platines au résonateur sont très proches l'un de l'autre, par exemple à 40 mm l'un de l'autre dans le cas d'une application à un hélicoptère d'un tonnage moyen comme explicité par la suite. La distance équivalente selon un dispositif classique serait de 60 à 65 millimètres en référence au document FR 2 499 505 par exemple.

Ainsi, les contraintes mécaniques résultant des efforts statiques et dynamiques transmis par l'une desdites pièces à l'autre pièce, sont réduites en raison de la grande Inertie de flexion précitée, et minimales à proximité de l'axe principal de flexion dudit dispositif. En conséquence, le dimensionnement des liaisons des platines au résonateur peut être réduit, ce qui permet un premier rapprochement des deux liaisons de chaque platine audit résonateur.

Le résonateur comporte au moins un élément constitué des parties suivantes :
- une âme principale renforcée dans sa zone centrale, cette dernière comprenant deux alésages recevant chacun l'un des axes de liaison avec lesdites deux platines,
- une jante externe destinée à augmenter le torseur d'inertie.

De façon avantageuse, l'âme principale du résonateur contenue dans son plan de rotation présente une forme amincie dans le sens de l'axe géométrique YY passant par chacune des fixations desdites deux pièces audit dispositif et une forme allongée dans le sens perpendiculaire. La jante, sensiblement en arc de cercle, complète ladite âme à chaque extrémité extérieure, de la forme allongée.

Par rapport aux résonateurs des brevets FR 2 499 505 et FR 2 787 161, dont les lames subissent essentiellement des contraintes dynamiques de flexion, l'âme et la jante du résonateur selon l'invention ne subissent que des contraintes dynamiques de cisaillement lors des mouvements oscillatoires du résonateur. Or les fréquences propres du résonateur dans ce mode de travail en cisaillement sont beaucoup plus élevées que dans un mode de travail en flexion, ce qui permet de les éloigner facilement de la fréquence de réglage du résonateur, sensiblement égale à l'un des premiers harmoniques kbΩ.

Le choix du matériau est alors moins critique pour le positionnement approprié des fréquences.

En outre, un tel résonateur n'étant soumis essentiellement qu'à des contraintes dynamiques de cisaillement et non directement aux efforts statiques et dynamiques exercés par lesdites deux pièces comme l'est le résonateur suivant le document FR 2 787 161, ceci autorise sa construction en un alliage d'aluminium, d'où un gain de masse inégalé pour un tel dispositif.

Dans le but d'augmenter encore l'efficacité du dispositif, il est possible de disposer, à l'extérieur de chaque jante, une masse complémentaire à masse volumique élevée, c'est-à-dire en un matériau tel que l'inermet, par exemple. Ces jantes et les masses complémentaires associées constituent essentiellement les éléments désignés habituellement « masses battantes ».

En outre, un deuxième rapprochement des deux liaisons entre le résonateur et les platines est obtenu avantageusement en intégrant directement les paliers lamifiés élastomériques cités ci-dessus dans les alésages prévus à cet effet et réalisés, comme précité, dans la zone renforcée de l'âme du résonateur,

Comme les paliers sont soumis essentiellement à des contraintes dynamiques de cisaillement et non directement aux efforts statiques et dynamiques exercés par lesdites deux pièces comme le sont les paliers du résonateur suivant le document FR 2 499 505, le dimensionnement des paliers du résonateur selon l'invention s'en trouve sensiblement allégé, favorisant encore le deuxième rapprochement des paliers.

Ces premier et deuxième rapprochements permettent l'obtention d'un rapport d'amplification λ inégalé par les dispositifs existants, et par suite une efficacité exceptionnelle, par exemple par rapport au document FR 2 787 161. On rappelle que ce rapport d'amplification représente le rapport des distances entre le centre de gravité des deux groupes de masses battantes (un groupe de masses battantes à chaque extrémité de la forme allongée de l'âme du résonateur) et la distance entre les axes des paliers lamifiés élastomériques. Dans le cas d'une application à l'hélicoptère, le gain en amplification, et corrélativement en efficacité, peut atteindre 50 %, voire d'avantage, ce qui conduit à des allègements exceptionnels du dispositif ce qui est particulièrement important dans le cas d'une utilisation du dispositif à bord d'un appareil volant comme un hélicoptère.

En outre, on conçoit que le dispositif selon l'invention peut comporter en variante deux résonateurs sensiblement identiques, disposés de part et d'autre d'une seule platine et liés à cette dernière par deux axes, chacun de ces axes étant monté à l'intérieur d'un palier lamifié élastomérique.

De façon avantageuse, le dispositif de filtrage de vibrations conforme à l'invention peut être aussi réalisé de façon symétrique par rapport à un point.

Bien entendu, dans le cadre de la présente invention, ledit dispositif de filtrage de vibrations peut être monté entre deux pièces quelconques, dont au moins l'une est vibrante pour réduire la transmission des vibrations à l'autre pièce.

Toutefois, dans un mode de réalisation préféré, lesdites deux pièces correspondent à deux tronçons d'une barre, de sorte que le dispositif conforme à l'invention est intégré dans ladite barre, par exemple une barre de soutien de la boîte de transmission principale d'un hélicoptère, du type précité.

La présente invention concerne également un dispositif de suspension d'une boîte de transmission d'un aéronef à voilure tournante, ladite boîte de transmission étant montée entre des moyens de propulsion et un rotor de sustentation dudit aéronef de façon sensiblement longitudinale à l'axe dudit rotor et étant suspendue par rapport au fuselage dudit aéronef, ledit dispositif de suspension comportant des barres de soutien réparties radialement autour de ladite boîte de transmission, dont les extrémités supérieures sont reliées à la partie supérieure de la boîte de transmission et dont les extrémités inférieures sont reliées audit fuselage.

Selon l'invention, ledit dispositif de suspension est remarquable :
- dans un premier mode de réalisation, en ce qu'au moins certaines desdites barres de soutien sont formées de deux tronçons et en ce que ledit dispositif de suspension comporte, pour chacune des barres de soutien ainsi formées, un dispositif antivibratoire conforme à l'invention, qui est agencé entre lesdits tronçons de la barre de soutien ; et
- dans un second mode de réalisation, en ce qu'il comporte de plus, pour au moins certaines desdites barres de soutien, à chaque fois un dispositif antivibratoire conforme à l'invention, qui est agencé à une extrémité de la barre correspondante et qui est destiné à réduire la transmission de vibrations entre cette barre et l'élément (la boîte de transmission ou le fuselage par exemple), auquel cette extrémité de la barre est reliée.

Ce dispositif de suspension conforme à l'invention permet ainsi de remédier aux inconvénients des dispositifs de suspension connus et décrits notamment dans les brevets FR 2 499 505 et FR 2 787 161 précités, puisque :
- en raison de l'intégration du dispositif antivibratoire dans les pièces ou barres de soutien et donc de l'absence de supports de masse et de masses battantes entre la boîte de transmission et les pièces d'appui, l'encombrement dudit dispositif de suspension est réduit et son accessibilité est augmentée,
- la masse est réduite, en particulier en raison de la réalisation possible du résonateur au moins en partie en alliage d'aluminium, et
- le rapport d'amplification λ, caractérisant l'efficacité du dispositif, peut être augmenté par rapport à celui des dispositif connus.

L'invention sera mieux comprise à l'aide de la description donnée ci-après, à titre non limitatif, en référence aux dessins annexés sur lesquels :
- les figures 1 à 3 illustrent schématiquement le principe de fonctionnement d'un dispositif antivibratoire selon un premier mode de réalisation de l'invention,
- la figure 4 est une vue de côté d'un second mode de réalisation d'un dispositif antivibratoire conforme à l'invention, en coupe suivant la ligne IV-IV de la figure 5,
- la figure 5 est une vue de face du mode de réalisation de la figure 4,
- la figure 6 est une vue de face du résonateur conforme au mode de réalisation de la figure 4,
- la figure 7 illustre la réalisation des paliers lamifiés élastomériques, en coupe suivant la ligne VII-VII de la figure 5,
- la figure 8 est une vue de côté d'un troisième mode de réalisation d'un dispositif antivibratoire conforme à l'invention,
- la figure 9 représente un deuxième mode de réalisation d'un résonateur conforme à l'Invention,
- la figure 10 représente l'intégration du dispositif dans une barre,
- la figure 11 représente schématiquement l'intégration du dispositif illustré sur la figure 5 dans un dispositif de suspension d'une boîte de transmission principale d'un aéronef à voilure tournante.

Les éléments présents dans plusieurs figures distinctes sont affectés d'une seule et même référence.

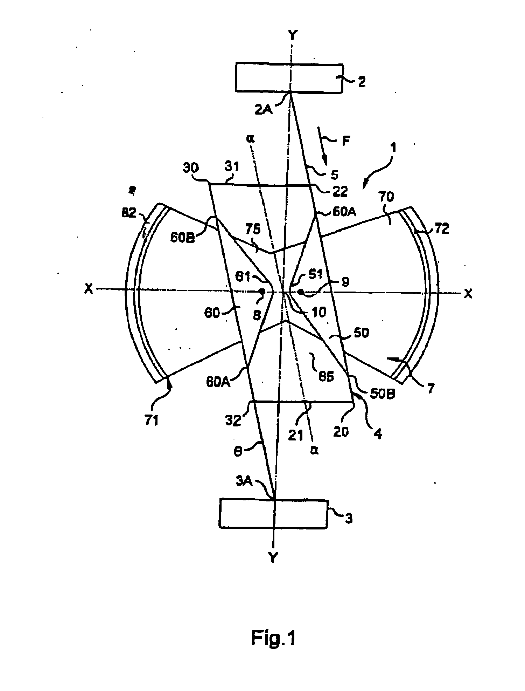

Le dispositif 1 conforme à l'invention et représenté schématiquement sur la figure 1, est destiné à filtrer la transmission des vibrations entre deux pièces 2 et 3, par exemple une pièce vibrante telle qu'un moteur et un support de cette pièce vibrante.

A cet effet, selon l'invention, le dispositif 1 comporte :
- au moins une première platine élastique 4 liée auxdites pièces 2 et 3 respectivement en deux points de fixation 2A et 3A définissant un axe géométrique YY, ladite platine étant localement déformable sous l'action de vibrations illustrées par une flèche F et transmises par l'une desdites pièces à l'autre pièce.
- au moins un premier résonateur 7 relié par l'intermédiaire de deux paliers lamifiés élastomériques 8 et 9 à ladite première platine de manière à être mis en rotation oscillante lors de la déformation locale de ladite première platine de sorte que ledit premier résonateur génère un torseur d'inertie antivibratoire qui, en opposition auxdites vibrations F, filtre leur transmission, par exemple de la pièce 2 à la pièce 3.

Dans ce but, ladite première platine est sensiblement symétrique par rapport au point 10, situé sensiblement entre les paliers lamifiés élastomériques 8 et 9 définissant un axe géométrique XX, perpendiculaire à l'axe YY.

La première platine 4 comporte tout d'abord deux bras externes rigides 5 et 6, opposés l'un par rapport à l'autre et sensiblement symétriques par rapport au point 10. Les bras externes 5 et 6 s'étendent respectivement entre le point 2A et le sommet extérieur 20 du bras externe 5 d'une part et, le point 3A et le sommet extérieur 30 du bras externe 6 d'autre part.

D'après la figure 1, on note que les bras externes 5 et 6 comportent respectivement les éléments suivants :
- pour le bras externe 5 : un premier tronçon schématisé par la ligne comprise entre le point 2A (ou extrémité extérieure) et le sommet intérieur 22 et un second tronçon schématisé par la ligne comprise entre le sommet intérieur 22 et le sommet extérieur 20,
- pour le bras externe 6 : un premier tronçon schématisé par la ligne comprise entre le point 3A (ou extrémité extérieure) et le sommet intérieur 32 et un second tronçon schématisé par la ligne comprise entre le sommet intérieur 32 et le sommet extérieur 30.

Les lignes (2A - 22) et (22 - 20) ne sont pas nécessairement rectilignes ni alignées. II en est de même pour les lignes (3A - 32) et (32 - 30), étant entendu que l'on désigne par raison de commodité, par exemple par (U-V) dans ce texte, une ligne comprise entre un point U et un point V.

Les bras externes 5, 6 sont liés par deux premières extensions élastiques 21, 31 formées dans le plan XX-YY de ladite première platine 4 de sorte que :
- la première extension élastique 21, schématisée par la ligne (20 - 32), assure la liaison du sommet extérieur 20 du bras externe 5 au sommet intérieur 32 du bras externe 6,
- la première extension élastique 31, schématisée par la ligne (30 - 22), assure la liaison du sommet extérieur 30 du bras externe 6 au sommet intérieur 22 du bras externe 5.

De plus, chaque bras externe 5, 6 comporte respectivement une deuxième extension interne 50, 60 dans le plan XX-YY de ladite première platine 4, comprise entre chaque première extension élastique 21, 31, chaque deuxième extension interne 50, 60 ayant l'aspect d'un triangle avec respectivement un sommet arrondi 51, 61 de telle manière que les sommets arrondis 51, 61 sont en face l'un de l'autre et sans contact, ce qui détermine une ouverture 65 dans la zone centrale de ladite platine 4. Sur la figure 1, les deuxièmes extensions internes 50 et 60 sont ainsi schématisées respectivement par les triangles (50A - 51 - 50B) et (60A - 61 - 60B).

Avantageusement, chaque bras externe 5 et 6 est conformé à son extrémité extérieure, c'est-à-dire au niveau de chaque point de fixation 2A et 3A respectivement en une première chape 52, 62, ces chapes étant destinées à recevoir chacune un axe de liaison avec ladite pièce correspondante.

Les premières chapes 52, 62 ne sont pas représentées sur la figure 1.

De même, chaque deuxième extension interne 50, 60 est conformée respectivement au niveau du sommet arrondi 51, 61 en forme d'une deuxième chape 53, 63, ces chapes étant destinées à recevoir chacune un axe de liaison (un boulon, par exemple) avec le résonateur 7. Les deuxièmes chapes 53 et 63 ne sont pas représentées sur la figure 1.

Le résonateur 7 comporte au moins une âme principale 70 comprenant deux alésages 78 et 79, non représentés sur la figure 1, destinés à recevoir les deux paliers lamifiés élastomériques 8 et 9 dans une zone centrale renforcée 75 pour assurer la liaison par un boulonnage dudit résonateur 7 à ladite première platine 4. Cette liaison est explicitée par la suite dans le cadre d'une variante particulière de l'invention.

De préférence, l'âme principale 70, contenue dans le plan de rotation XX-YY dudit résonateur 7, présente une forme amincie dans le sens de l'axe géométrique YY et une forme allongée dans le sens de l'axe XX.

Par ailleurs, le résonateur 7 est avantageusement équipé d'une jante 72, sensiblement en arc de cercle et disposée à chaque extrémité extérieure 71 de la forme allongée, pour augmenter la masse du résonateur aussi loin que possible du centre 10 du dispositif et corrélativement le torseur d'inertie.

Afin d'accroître encore l'efficacité du dispositif 1, il est également possible de disposer, à l'extérieur de chaque jante 72, une masse complémentaire 82 à masse volumique élevée, c'est-à-dire en un matériau tel que l'inermet par exemple. La Jante 72 et l'éventuelle masse complémentaire 82 constituent les parties essentielles des masses battantes.

Il se fait que par construction, l'inertie de la première platine 4 est importante par rapport à son axe principal de flexion αα. II s'ensuit, par rapport au document FR 2 787 161, une réduction du niveau des contraintes mécaniques exercées sur ladite première platine et résultant des efforts statiques et dynamiques transmis par l'une desdites pièces 2 ou 3 à l'autre pièce. Ces contraintes mécaniques réduites sont d'ailleurs minimales à proximité des liaisons, via les paliers lamifiés élastomériques 8 et 9. audit résonateur 7. En conséquence, la transmission des efforts statiques et dynamiques de l'une des deux dites pièces 2 et 3 à l'autre est assurée essentiellement par lesdits bras externes 5 et 6 et les premières extensions élastiques 21, 31. Le délestage en efforts au niveau des liaisons de la première platine 4 permet une réduction du dimensionnement desdites deuxièmes chapes 53, 63 ce qui autorise un premier rapprochement des paliers lamifiés élastomériques 8 et 9.

Un deuxième rapprochement des deux liaisons entre la première platine 4 et le résonateur 7 est obtenu par l'intégration des paliers lamifiés élastomériques dans la zone centrale renforcée 75 du résonateur. De la sorte, cette zone centrale renforcée 75 constitue l'armature externe des paliers lamifiés élastomériques. Le rapport d'amplification λ tel que défini précédemment peut être augmenté de la sorte de 50 %, voire davantage, par rapport aux dispositifs connus par ailleurs.

En outre, on constate que le résonateur 7 est soumis essentiellement à des contraintes dynamiques de cisaillement et non aux efforts statiques et dynamiques exercés par lesdites deux pièces 2 et 3 comme l'est le résonateur conforme au document FR 2 787 161, ce qui favorise encore le deuxième rapprochement des deux liaisons entre la première platine 4 et le résonateur 7 et qui autorise également la construction de l'âme 70 et de la jante 72 en un alliage d'aluminium par exemple, d'où un gain de masse substantiel, particulièrement important dans le cas d'une application à un appareil volant, tel qu'un hélicoptère, par exemple.

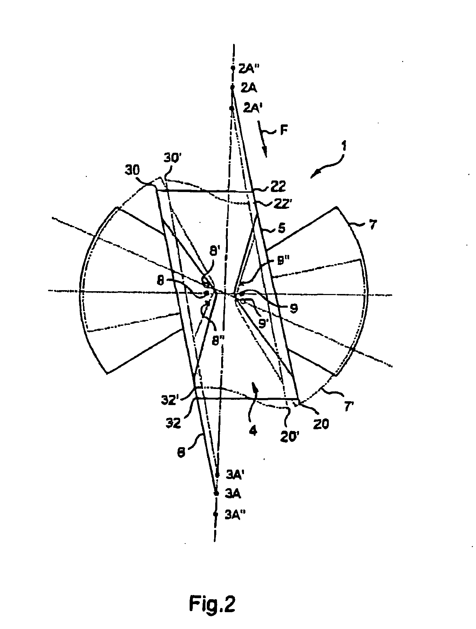

La figure 2 illustre schématiquement le fonctionnement du dispositif 1 conforme à l'invention.

Sous l'effet des sollicitations dues aux efforts statiques, la première platine 4 et le premier résonateur 7 sont représentés en traits pleins. Les points de fixation des bras externes 5 et 6 respectivement auxdites pièces 2 et 3 sont désignés 2A et 3A.

On a représenté en traits interrompus la déformation de la première platine 4 et ceci de façon très agrandie pour une meilleure compréhension. Dans ces conditions, les points de fixation 2A et 3A prennent respectivement les positions 2A' et 3A' tels que montrés sur la figure 2 dans le cas d'une sollicitation due à une compression puis 2A" et 3A" dans le cas d'une sollicitation en traction. Bien entendu, ces sollicitations alternées en traction et en compression résultent de l'effet de vibrations transmises par l'une des deux dites pièces 2 ou 3 à l'autre pièce.

Dans ces conditions, les bras externes 5 et 6 subissent un simple déplacement, pratiquement sans déformation en raison de leur rigidité importante. Par contre, les premières extensions élastiques 21 et 31 se déforment localement de sorte que, dans le mouvement d'ensemble, les axes de liaison de ladite première platine 4 audit premier résonateur 7, portés par les deux paliers lamifiés élastomériques, se déplacent des positions initiales 8 et 9 respectivement aux positions 8' et 9', dans le cas d'une sollicitation dynamique en compression puis aux positions 8" et 9" sous l'effet d'une sollicitation dynamique en traction. Ces déplacements des paliers lamifiés élastomériques entraînent une rotation oscillante du premier résonateur 7 ce qui génère un torseur d'inertie antivibratoire exercé sur ladite première platine 4. d'où un filtrage sinon une annulation de la transmission de vibrations de l'une des deux dites pièces 2 ou 3 à l'autre pièce.

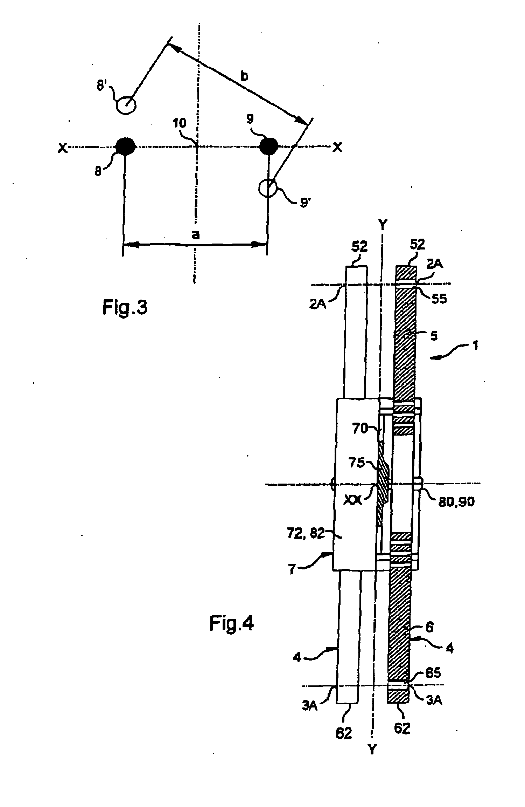

Toutefois, il importe de remarquer, en rapport avec la figure 3, que la mise en mouvement du premier résonateur 7 par la première platine 4 est rendue possible grâce à l'utilisation de paliers 8 et 9 de type lamifiés êlastomériques.

En effet, la souplesse des premières extensions 21 et 31 est localisée de sorte que les sommets respectifs extérieurs 20, 30 et intérieurs 22 et 32 des bras externes 5 et 6 constituent sensiblement un encastrement au niveau desdites premières extensions 21 et 31 comme montré par la suite. Cette construction limite la déformation de l'entraxe « a » de ladite première platine 4, compris entre les axes des paliers 8 et 9 par rapport à d'autres types de construction. Cependant, il se fait que l'entraxe «b», compris entre les positions 8' et 9', par exemple, diffère de l'entraxe « a » en raison de la déformation de ladite première platine 4.

Or, l'âme 70 du résonateur est pratiquement indéformable dans le plan XX-YY et, par conséquent l'entraxe entre les paliers 8 et 9 demeure inchangé si les paliers sont réalisés en matériaux rigides.

Le système de paliers lamifiés élastomériques, selon l'invention, est particulièrement bien adapté à cette situation car il permet précisément une déformation de l'entraxe d'une valeur « a » à une valeur « b » en raison d'une certaine souplesse entre la partie interne et la partie externe desdits paliers comme expliqué par la suite à propos d'une variante de réalisation du dispositif, selon l'invention.

Dans le cas de réalisation pratique illustré par les figures 4 à 6, on retrouve avec les mêmes références les éléments du dispositif de filtrage de vibrations représentés schématiquement aux figures 1 et 2.

Comme on le voit sur la figure 4, le dispositif antivibratoire 1 correspond cependant à une variante qui comporte une première et une deuxième platine élastique 4. Chacune de ces platines, sensiblement identiques, est disposée symétriquement par rapport au plan XX-YY et est reliée auxdites pièces 2 et 3 respectivement en deux points de fixation 2A et 3A. Chaque bras externe 5, 6 est conformé à son extrémité extérieure respectivement en forme d'une première chape 52, 62. Les deux alésages 55, un alésage 55 étant réalisé dans chacune des deux chapes 52, constituent un palier double supportant un boulon de liaison (non représenté) avec ladite pièce 2, De même, les deux alésages 65 relatifs aux deux chapes 62 constituent également un palier double supportant un boulon de liaison (non représenté) avec ladite pièce 3.

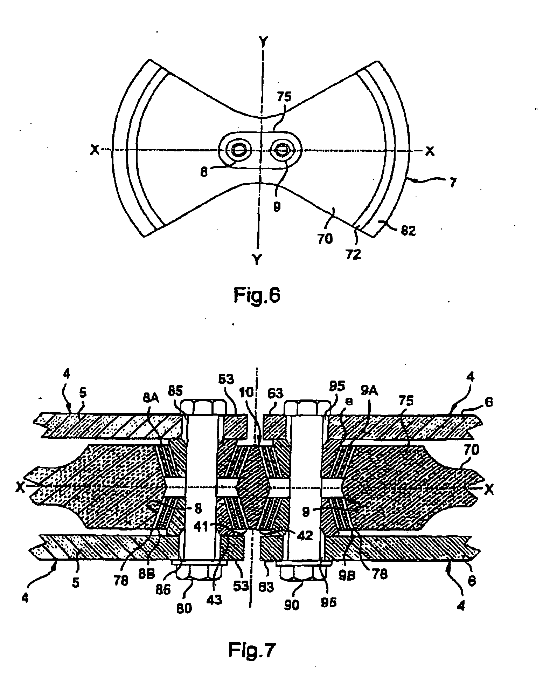

Un premier résonateur 7, comportant au moins une âme 70, une jante 72 et éventuellement une masse complémentaire 82, est disposé entre chacune des platines 4. L'âme de ce résonateur présente un renforcement dans sa zone centrale 75 pour y loger les deux paliers lamifiés élastomériques 8 et 9. De cette façon, les deux platines 4 et le résonateur 7 sont liés par deux boulons 80, 90, par exemple. Le boulon 80 est supporté par deux alésages 85, un alésage 85 étant réalisé dans chacune des deuxièmes chapes 53, qui constituent un palier double. De même, le boulon 90 est supporté par deux alésages 95, chaque alésage 95 étant pratiqué dans chacune des deuxièmes chapes 63, constituant de ce fait un palier double. Les éléments 53, 63, 85 et 95 ne sont pas représentés sur la figure 4. Par ailleurs, les boulons 80 et 90 maintiennent le premier résonateur 7 en traversant respectivement les paliers lamifiés élastomériques 8 et 9. Les détails de la fixation des deux platines 4 avec le résonateur 7 sont montrés sur la figure 7 dont le commentaire est complété par ailleurs,

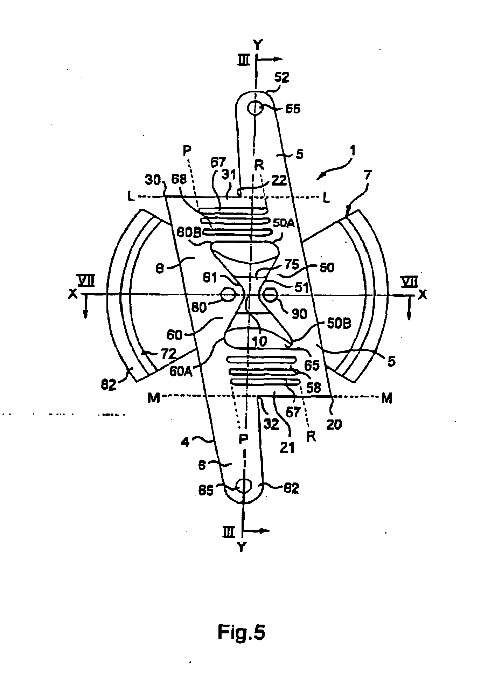

La figure 5 présente la vue de face du dispositif 1 faisant l'objet du deuxième mode de réalisation selon la figure 4.

En premier lieu, la figure 5 illustre l'aspect des bras externes 5 et 6 d'une platine. On note que :
- le bras externe 5 comprend :
   - un premier tronçon compris entre la chape 52 (avec un alésage 55 relatif au point de fixation 2A) et la ligne LL (en traits interrompus) passant sensiblement par le sommet intérieur 22 et le sommet extérieur 30,
   - un second tronçon compris d'une part entre la ligne LL et la ligne MM (en traits interrompus) passant sensiblement par le sommet intérieur 32 et le sommet extérieur 20 et d'autre part situé à droite de la ligne RR (en traits interrompus), c'est-à-dire dans une zone ne comportant pas d'ouverture.
- le bras externe 6 comprend :
   - un premier tronçon compris entre la chape 62 (avec un alésage 65 relatif au point de fixation 3A) et la ligne MM,
   - un second tronçon compris d'une part entre la ligne MM et la ligne LL et d'autre part situé à gauche de la ligne PP (en traits interrompus), c'est-à-dire dans une zone ne comportant pas d'ouverture.

En second lieu, la figure 5 montre, relativement à chacune desdites deux platines 4, les deux premières extensions élastiques 21 et 31 qui relient respectivement :
- d'une part, le sommet extérieur 20 du bras externe 5 au sommet intérieur 32 du bras externe 6,
- d'autre part, le sommet extérieur 30 du bras externe 6 au sommet intérieur 22 du bras externe 5.

Chacune de ces liaisons élastiques crée un assouplissement local dans les zones 21 et 31 réalisé respectivement au moyen de fentes 57, 67, parallèles entre elles et ayant une direction sensiblement perpendiculaire à l'axe YY,

De la sorte, chacune des extensions élastiques 21 et 31, se présente sous la forme de plusieurs lames parallèles respectivement 58, 68, reliant chaque sommet extérieur 20, 30 de chaque bras externe au sommet intérieur 32, 22 de l'autre bras.

On remarque que ces lames 58, 68 sont bien encastrées à leurs bras externes respectifs, ce qui confirme l'allure du schéma du dispositif 1, déformé sous l'effet des efforts dynamiques transmis par l'une des pièces 2 ou 3 à l'autre pièce, tel que représenté sur la figure 2.

Par ailleurs, la figure 5 montre l'aspect triangulaire des deuxièmes extensions internes 50, 60 (une extension interne 50 et une extension interne 60 par platine). Les extensions internes 50, 60 sont respectivement conformées en forme de chape au niveau des sommets arrondis 51, 61 correspondants.

La figure 6 Illustre l'aspect du résonateur en vue de face avec :
- une zone amincie près de l'axe YY,
- une zone allongée selon l'axe XX,
- une zone renforcée au niveau 75, c'est-à-dire au niveau des liaisons dudit résonateur 7 auxdites deux platines 4.

La figure 7, en rapport avec les figures 4 et 5, détaille la liaison entre les deux platines 4 et le résonateur 7.

Comme vu précédemment, les boulons 80 et 90 sont respectivement supportés par les paliers doubles formés par les deuxièmes chapes 53 et 63 munies respectivement d'un alésage 85, 95, relativement aux platines 4.

Par ailleurs, les paliers lamifiés élastamériques 8 et 9 supportent respectivement les boulons 80 et 90, ce qui assure de ce fait la fixation du résonateur 7 auxdites deux platines 4.

En pratique, chaque palier lamifié élastomérique 8 et 9 est réalisé respectivement en deux demi paliers lamifiés élastamériques 8A, 8B (palier 8) et 9A, 9B (palier 9).

De façon avantageuse, chaque demi palier lamifié élastomérique 8A, 8B, 9A, 9B est :
- d'une part, constitué d'un empilement de couches en élastomère 41 comprises entre des couches métalliques 42,
- d'autre part, préférentiellement de forme conique de sorte que les couches 41 et 42 ont une forme tronconique.

Par ailleurs, l'armature interne 43 de chaque demi palier est métallique (métal approprié : acier par exemple) avec un alésage central permettant la mise en place des boulons 80 et 90 et présente une surépaisseur « e » du côté des platines 4. II est rappelé que l'armature externe desdits demi paliers lamifiés élastomériques est constituée par la zone centrale renforcée 75 du résonateur 7.

Ce type de palier lamifié élastomérique conique 8 et 9 permet de la sorte la reprise d'efforts combinés radiaux et axiaux et introduit une précontrainte au montage après serrage des boulons, afin d'améliorer la tenue en fatigue de l'élastomère notamment en cisaillement.

Par conséquent, l'entraxe « a » entre les paliers lamifiés élastomériques coniques peut subir des variations dimensionnelles, d'ailleurs très faibles dans le cas d'une application à la boîte de transmission principale d'hélicoptère en raison de variations de l'ordre seulement de 3 à 5 millimètres entre les points de fixation 2A et 3A.

Ainsi, on comprend que les déformations des platines élastiques 4 entraînent la mise en rotation du résonateur 7, sous l'effet de sollicitations dynamiques, et par suite le filtrage de la transmission de vibrations de l'une des pièces 2 ou 3 à l'autre pièce.

En outre, on note que de tels paliers lamifiés élastomériques et coniques peuvent être intégrés directement au résonateur 7 par moulage des couches tronconiques 41 d'élastomère entre les couches métalliques 42 et les alésages 78 et 79 réalisés dans le renforcement 75 dudit résonateur 7. Cette construction, pour laquelle la zone de renforcement 75 du résonateur remplit le rôle d'armature externe aux paliers lamifiés élastomériques et coniques, permet un rapprochement optimal des boulons 80 et 90, ce qui augmente d'autant l'efficacité du dispositif antivibratoire 1 en éloignant les masses importantes en rotation, constituées par la jante 72 et l'éventuelle masse complémentaire 82, des axes de rotation du résonateur 7 représentés par les boulons 80 et 90,

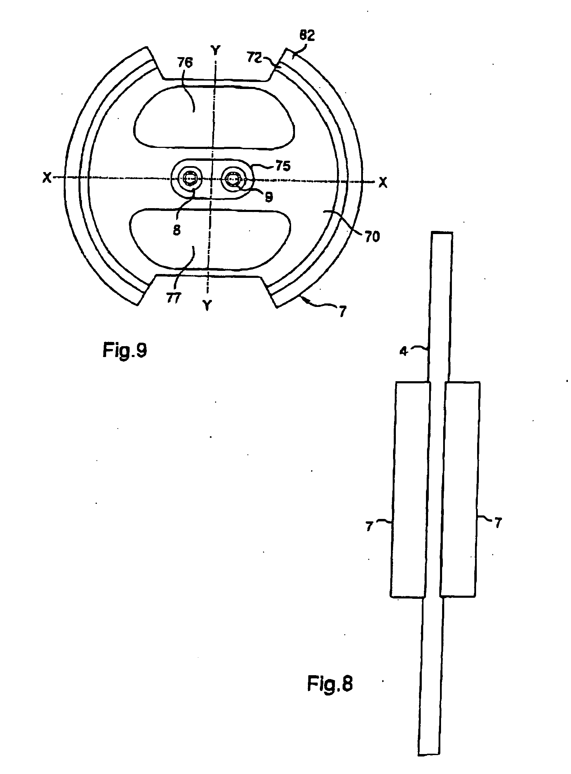

Une troisième variante est schématisée en vue de côté sur la figure 8. Il s'agit alors d'un dispositif, conforme à l'invention, comprenant alors une seule platine 4 et deux résonateurs 7, disposés de part et d'autre de cette platine. Dans ce cas, la fixation de ces trois éléments se fait encore avec des paliers lamifiés élastomériques et coniques en deux parties.

Par ailleurs, il convient de remarquer que, selon la figure 9, l'âme 70 du résonateur peut, toujours pour une raison de gain de masse, comporter en variante deux ouvertures 76 et 77, allongée suivant la direction de l'axe XX, par exemple.

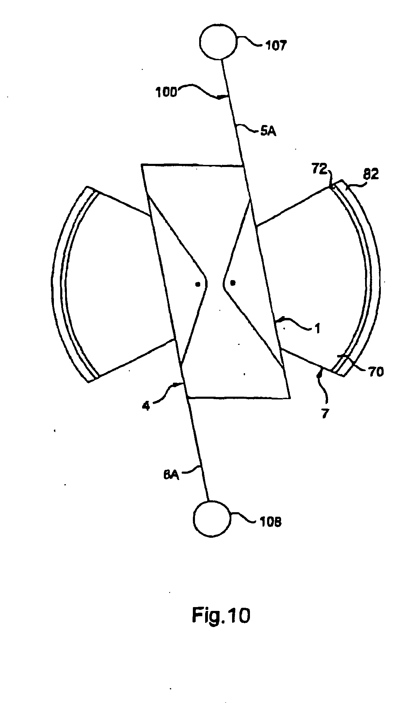

Le dispositif 1 conforme à l'invention tel que décrit précédemment peut être appliqué à tout type de système pour lequel il convient de réduire la transmission de vibrations entre deux pièces, A cet effet, il peut :
- soit être agencé directement entre les deux pièces 2 et 3, comme illustré sur la figure 1 ;
- soit être intégré dans une barre 100 de liaison ou de fixation, comme représenté sur la figure 10, où les pièces 2 et 3 sont remplacées par deux tronçons 5A et 6A de ladite barre 100, qui peut être articulée à deux éléments dont au moins l'un est vibrant par l'intermédiaire de rotules 107 et 108 prévues aux extrémités libres desdits tronçons 5A et 6A.

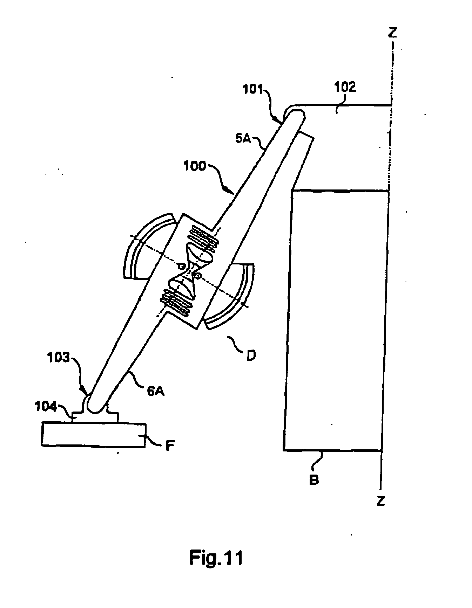

Toutefois, dans un mode de réalisation préféré, ledit dispositif 1 est utilisé pour perfectionner un dispositif de suspension D d'une boîte de transmission B d'un aéronef à voilure tournante, comme représenté partiellement et schématiquement sur la figure 11.

De façon connue, une telle boîte de transmission B, par exemple la boîte de transmission principale d'un hélicoptère, est montée entre des moyens de propulsion et un rotor de sustentation non représentés dudit aéronef, de façon sensiblement longitudinale à l'axe Z-Z dudit rotor et est suspendue par rapport au fuselage F dudit aéronef.

Pour réaliser cette suspension, le dispositif de suspension D comporte de façon connue des barres d'appui réparties radialement autour de ladite boîte de transmission B, dont les extrémités supérieures 101 sont articulées à la partie supérieure 102 de la boîte de transmission B et dont les extrémités inférieures 103 sont articulées audit fuselage F par l'intermédiaire d'un palier 104 ou à des lames de suspension non représentées.

Pour des raisons de simplification du dessin, on a uniquement représenté une seule barre d'appui sur la figure 11,

Selon l'invention, au moins certaines des barres d'appui dudit dispositif de suspension D sont réalisées sous forme de deux tronçons 5A et 6A et intègrent un dispositif antivibratoire 1 conforme à l'invention, tel que celui illustré sur l'une quelconque des figures 1 à 10.

Sur la figure 11, il s'agit du mode de réalisation du dispositif antivibratoire 1, représenté explicitement sur la figure 5. Bien entendu, les autres modes de réalisation conformes à l'invention peuvent également être utilisés à cet effet.

En outre, sur la figure 11, l'invention est appliquée à un dispositif de suspension simplifié D.

Toutefois, elle peut bien entendu également être appliquée à un dispositif D qui comporte de plus un système de suspension non représenté, du type connu et décrit notamment dans le brevet FR 2 747 098, qui relie la partie inférieure de la boîte de transmission au fuselage de l'aéronef et comporte :
- des lames de suspension qui sont réparties radialement autour de ladite boîte de transmission dans un plan sensiblement orthogonal à l'axe du rotor, dont les extrémités radialement internes sont fixées sur la partie inférieure de ladite boîte de transmission et dont les extrémités radialement externes sont articulées sur le fuselage ; et
- une membrane sensiblement plane fixée sous la boîte de transmission, faisant saillie radialement au-delà de ladite boîte de transmission, fixée par sa partie périphérique au fuselage de l'aéronef, de façon sensiblement orthogonale à l'axe du rotor, déformable en flexion sous des efforts exercés orthogonalement à son plan, et rigide sous des efforts exercés dans son plan.

Dans un autre mode de réalisation non représenté et conforme à l'invention, le (ou les) dispositif antivibratoire 1 utilisé n'est pas intégré dans la barre d'appui, comme cela est le cas sur la figure 11, mais est agencé entre la barre d'appui et l'élément auquel elle doit être reliée, c'est-à-dire :
- soit entre l'extrémité supérieure 101 de la barre d'appui 100 et la partie supérieure 102 de la boîte de transmission B ;
- soit entre l'extrémité inférieure 103 de la barre d'appui 100 et le fuselage F.

Ainsi, grâce à l'Invention :
- on libère l'accès à la boîte de transmission B, ce qui facilite en particulier le montage et le démontage ; et
- on réduit le coût du dispositif de suspension D, et sa masse, notamment par la réalisation de l'âme et de la jante du résonateur en un alliage d'aluminium, tout en augmentant son efficacité par rapport aux dispositifs de suspension connus,

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de filtrage de vibrations entre deux pièces (2) et (3),
**caractérisé en ce qu**'il comporte :
- au moins une première platine élastique (4) liée auxdites pièces (2) et (3) respectivement en deux points de fixation (2A) et (3A) définissant un axe géométrique YY, ladite première platine (4) étant localement déformable sous l'action des vibrations transmises par l'une desdites deux pièces à l'autre pièce,
- au moins un premier résonateur (7) équipé de deux paliers lamifiés élastomériques (8, 9), lesquels d'une part définissent un axe géométrique XX sensiblement perpendiculaire à l'axe géométrique YY, ces axes XX et YY concourrant en un point (10) et, d'autre part reçoivent respectivement chacun un moyen de fixation (80, 90) à ladite première platine élastique (4) de manière à mettre en rotation oscillante ledit résonateur (7) lors de ladite déformation locale de ladite première platine élastique (4) de sorte que ledit résonateur (7) génère un torseur d'inertie antivibratoire qui s'oppose auxdites vibrations et filtre leur transmission d'une pièce à l'autre.

2. Dispositif selon la revendication 1,
**caractérisé en ce qu**'il comporte de plus une deuxième platine élastique (4), sensiblement identique à la première platine . élastique (4), ces première et deuxième platines élastiques (4) étant en vis-à-vis, de part et d'autre dudit premier résonateur (7), et liées audit résonateur (7) par lesdits moyens de fixation (80, 90) supportés respectivement par lesdits paliers lamifiés élastomériques (8, 9).

3. Dispositif selon la revendication 1,
**caractérisé en ce qu**'il comporte de plus un deuxième résonateur (7), sensiblement identique au premier résonateur (7), ces premier et deuxième résonateurs (7) étant en vis-à-vis, de part et d'autre de ladite première platine (4), et liés à ladite première platine (4) par lesdits moyens de fixation (80, 90) supportés respectivement par lesdits paliers lamifiés élastomériques (8. 9) de chacun desdits premier et deuxième résonateurs (7).

4. Dispositif selon l'une quelconque des revendications 1 à 3,
**caractérisé en ce que** ladite platine (4) comporte deux bras externes (5) et (6) qui s'étendent respectivement entre le point de fixation (2A) et un sommet extérieur (20) du bras externe (5) d'une part, le point (3A) et un sommet extérieur (30) du bras externe (6) d'autre part.

5. Dispositif selon la revendication 4,
**caractérisé en ce que** lesdits bras externes (5. 6) sont conformés au niveau de chaque point de fixation (2A, 3A) respectivement en une première chape (52, 62), chaque chape (52, 62) recevant un axe de liaison avec ladite pièce (2, 3) correspondante.

6. Dispositif selon l'une quelconque des revendications 4 ou 5,
**caractérisé en ce que** lesdits deux bras externes (5) et (6) sont liés par deux premières extensions élastiques (21) et (31) dans le plan XX-YY, la première extension élastique (21) assurant la liaison du sommet extérieur (20) du bras externe (5) à un sommet intérieur (32) du bras externe (6) d'une part, et la deuxième extension élastique (31) assurant la liaison du sommet extérieur (30) du bras externe (6) à un sommet intérieur (22) du bras externe (5) d'autre part.

7. Dispositif selon la revendication 6,
**caractérisé en ce que** lesdites deux premières extensions élastiques (21) et (31) procurent un assouplissement local dans les zones (21) et (31), réalisé respectivement au moyen de fentes (57) et (67), parallèles entre elles, qui délimitent des lames parallèles, respectivement (58) et (68) reliant chaque sommet extérieur (20, 30) de chaque bras externe respectivement au sommet intérieur (32, 22) de l'autre bras.

8. Dispositif selon la revendication 7,
**caractérisé en ce que** lesdites lames (58, 68) ont une direction sensiblement perpendiculaire à l'axe YY.

9. Dispositif selon la revendication 7,
**caractérisé en ce que** lesdites lames (58, 68) ont une longueur identique.

10. Dispositif selon les revendications 8 ou 9,
**caractérisé en ce que** les lames (58, 68) sont encastrées à leurs bras externes respectifs.

11. Dispositif selon l'une quelconque des revendications 6 à 10,
**caractérisé en ce que** chaque bras externe (5, 6) comporte respectivement une deuxième extension interne (50, 60) dans le plan XX-YY, comprise entre chaque première extension élastique (21, 31), chaque deuxième extension interne ayant l'aspect d'un triangle avec respectivement un sommet arrondi (51, 61), ces sommets arrondis étant en face l'un de l'autre, sans contact, ce qui détermine une ouverture (65) dans la zone centrale (75) de ladite platine (4).

12. Dispositif selon la revendication 11,
**caractérisé en ce que** chaque deuxième extension interne (50, 60) est conformée respectivement au niveau du sommet arrondi (51, 61) en forme d'une deuxième chape (53, 63), chacune desdites chapes recevant respectivement un moyen de liaison (80, 90) de ladite platine (4) audit résonateur (7).

13. Dispositif selon l'une quelconque des revendications 1 à 12,
**caractérisé en ce que** ladite platine (4) est symétrique par rapport au point (10) d'intersection des axes XX et YY.

14. Dispositif selon l'une quelconque des revendications 1 à 13,
**caractérisé en ce que** ledit résonateur (7) comporte d'une part une âme (70) ayant une forme allongée dans la direction de l'axe géométrique XX et une forme amincie dans la direction de l'axe géométrique YY et, d'autre part une jante (72) de chaque côté externe de l'âme.

15. Dispositif selon la revendication 14,
**caractérisé en ce que** l'âme (70) dudit résonateur (7) comporte deux ouvertures (76) et (77), symétriques par rapport à l'axe XX et sensiblement oblongues dans le sens dudit axe XX.

16. Dispositif selon l'une quelconque des revendications 14 à 15,
**caractérisé en ce que** ledit résonateur (7) présente un renforcement dans une zone centrale (75) de l'âme (70).

17. Dispositif selon l'une quelconque des revendications 14 à 16,
**caractérisé en ce que** l'âme (70) et la jante (72) dudit résonateur (7) sont en un alliage d'aluminium.

18. Dispositif selon l'une quelconque des revendications 14 à 17,
**caractérisé en ce qu**'une masse complémentaire (82) est disposée sur la jante (72).

19. Dispositif selon la revendication 18,
**caractérisé en ce que** ladite masse complémentaire (82) est en inermet.

20. Dispositif selon l'une quelconque des revendications 14 à 19,
**caractérisé en ce que** ledit résonateur (7) est symétrique par rapport au point (10) d'intersection des axes XX et YY.

21. Dispositif selon l'une quelconque des revendications 1 à 20,
**caractérisé en ce que** lesdits paliers lamifiés élastomériques (8) et (9) sont chacun constitués par deux demi paliers respectivement (8A, 8B) et (9A, 9B) dont l'armature externe est constituée par la zone centrale renforcée (75) du résonateur (7) et l'armature interne (43) est en un métal approprié.

22. Dispositif selon la revendication 21,
**caractérisé en ce que** les demi paliers lamifiés élastomériques (8A, 8B. 9A, 9B) sont coniques.

23. Dispositif selon l'une quelconque des revendications 21 à 22,
**caractérisé en ce que** les demi paliers lamifiés élastomériques (8A, 8B, 9A, 9B) sont montés avec une précontrainte dans la zone renforcée (75) de l'âme (70) dudit résonateur (7).

24. Dispositif selon l'une quelconque des revendications 1 à 23,
**caractérisé en ce que** ledit moyen de fixation (80, 90) est un boulon.

25. Dispositif selon l'une quelconque des revendications précédentes,
**caractérisé en ce que** lesdites deux pièces correspondent à deux tronçons (5A, 8A) d'une barre (100).

26. Dispositif de suspension d'une boite de transmission (B) d'un aéronef à voilure tournante comprenant un dispositif selon une des revendications, ladite boîte de transmission (B) étant montée entre des moyens de propulsion et un rotor de sustentation dudit aéronef de façon sensiblement longitudinale à l'axe (Z-Z) dudit rotor et étant suspendue par rapport au fuselage (F) dudit aéronef, ledit dispositif de suspension (D) comportant des barres d'appui (100) réparties radialement autour de ladite boite de transmission (B) dont les extrémités supérieures (101) sont reliées à la partie supérieure (102) de la boite de transmission (B) et dont les extrémités inférieures (103) sont reliées audit fuselage (F),
**caractérisé en ce qu**'au moins certaines desdites barres d'appui (100) sont formées de deux tronçons (5A, 6A) et en ce que ledit dispositif de suspension (D) comporte, pour chacune des barres d'appui (100) ainsi formées, un dispositif (1) tel que celui spécifié sous l'une quelconque des revendications 1 à 25, qui est agencé entre lesdits tronçons (5A, 6A) de ladite barre d'appui (100).

27. Dispositif de suspension d'une boite de transmission (B) d'un aéronef à voilure tournante comprenant un dispositif selon une des revendications, ladite boîte de transmission (B) étant montée entre des moyens de propulsion et un rotor de sustentation dudit aéronef de façon sensiblement longitudinale à l'axe (Z-Z) dudit rotor et étant suspendue par rapport au fuselage (F) dudit aéronef, ledit dispositif de suspension (D) comportant des barres d'appui (100) réparties radialement autour de ladite boite de transmission (B), dont les extrémités supérieures (101) sont reliées à la partie supérieure (102) de la boite de transmission (B) et dont les extrémités inférieures (103) sont reliées audit fuselage (F),
**caractérisé en ce qu**'il comporte de plus, pour au moins certaines desdites barres d'appui, à chaque fois un dispositif (1) tel que celui spécifié sous l'une quelconque des revendications 1 à 25, qui est agencé à une extrémité de la barre correspondante et qui est destiné à réduire la transmission de vibrations entre cette barre et l'élément, auquel cette extrémité de la barre est reliée.

## Claims

1. A device for filtering vibrations between two parts (2) and (3), **characterised in that** it includes:
- at least a first resilient plate (4) connected to the said parts (2): and (3), respectively at two fixing points (2A) and (3A) which define a geometric axis YY, the said first plate (4) being deformable locally by the action of vibrations transmitted by one of the said two parts to the other part,
- at least a first resonator (7) equipped with two laminated elastomeric bearings (8, 9) which on the one hand define a geometric axis XX which is substantially perpendicular to the geometric axis YY, these axes XX and YY coinciding at a point (10), and on the other hand each receive a respective means (80, 90) for fixing to the said first resilient plate (4) such that the said resonator (7) is rotated in oscillating manner during the said local deformation of the said first resilient plate (4) such that the said resonator (7) generates a torsor of anti-vibrational inertia which acts in opposition to the said vibrations and filters the transmission thereof from one part to the other.

2. A device according to Claim 1, **characterised in that** it further includes a second resilient plate (4) which is substantially identical to the first resilient plate (4), these first and second resilient plates (4) being opposite one another on either side of the said first resonator (7) and connected to the said resonator (7) by the said fixing means (80, 90), which are respectively supported by the said laminated elastomeric bearings (8,9).

3. A device according to Claim 1, **characterised in that** it further includes a second resonator (7) which is substantially identical to the first resonator (7), these first and second resonators (7) being opposite one another on either side of the said first plate (4) and connected to the said first plate (4) by the said fixing means (80, 90), which are respectively supported by the said laminated elastomeric bearings (8, 9) of each of the said first and second resonators (7).

4. A device according to any one Claims 1 to 3, **characterised in that** the said plate (4) includes two outer arms (5) and (6) which extend respectively between the point of fixing (2A) and an outer tip (20) of the outer arm (5) on the one hand and the point (3A) and an outer tip (30) of the outer arm (6) on the other hand.

5. A device according to Claim 4, **characterised in that** the said outer arms (5, 6) are shaped at each fixing point (2A, 3A) into a respective first eye joint (52, 62), each eye joint (52, 62) receiving a pin for connection to the corresponding part (2, 3).

6. A device according to either of Claims 4 or 5, **characterised in that** the said two outer arms (5) and (6) are connected by means of two first resilient extensions (21) and (31) in the plane XX-YY, the first resilient extension (21) providing the connection between the outer tip (20) of the outer arm (5) and an inner tip (32) of the outer arm (6) on the one hand and the second resilient extension (31) providing the connection between the outer tip (30) of the outer arm (6) and an inner tip (22) of the outer arm (5) on the other hand.

7. A device according to Claim 6, **characterised in that** the said two first resilient extensions (21) and (31) provide a local flexibility in the zones (21) and (31) which are respectively created by means of slots (57) and (67) which are mutually parallel and delimit parallel blades (58) and (68) respectively, the latter connecting each outer tip (20, 30) of each outer arm to the inner tip (32, 22) of the respective other arm.

8. A device according to Claim 7, **characterised in that** the said blades (58, 68) point in a direction substantially perpendicular to the axis YY.

9. A device according to Claim 7, **characterised in that** the said blades (58, 68) are of the same length.

10. A device according to Claim 8 or 9, **characterised in that** the blades (58, 68) are integral with their respective outer arms.

11. A device according to any one of Claims 6 to 10, **characterised in that** each outer arm (5, 6) includes a respective second inner extension (50, 60) in the plane XX-YY, lying between each resilient first extension (21, 31), each second inner extension being in the form of a triangle with in each case a rounded apex (51, 61), these rounded apices being opposite one another and not in contact, which defines an opening (65) in the central zone (75) of the said plate (4).

12. A device according to Claim 11, **characterised in that** each second inner extension (50, 60) is shaped at the respective rounded apex (51, 61) as a second eye joint (53, 63), each of the said eye joints receiving a respective means (80, 90) for connecting the said plate (4) to the said resonator (7).

13. A device according to any one of Claims 1 to 12, **characterised in that** the said plate (4) is symmetrical in relation to the point (10) of intersection of the axes XX and YY.

14. A device according to any one of Claims 1 to 13, **characterised in that** the said resonator (7) includes, on the one hand, a core (70) having an elongate shape in the direction of the geometric axis XX and a narrowed shape in the direction of the geometric axis YY and, on the other, a rim (72) on each outer side of the care.

15. A device according to Claim 14, **characterised in that** the core (70) of the said resonator (7) includes two openings (76) and (77) which are symmetrical in relation to the axis XX and substantially rectangular In the direction of the said axis XX.

16. A device according to either of Claims 14 and 15, **characterised in that** the said resonator (7) has a reinforcement in a central zone (75) of the core (70).

17. A device according to any one of Claims 14 to 16, **characterised in that** the core (70) and the rim (72) of the said resonator (7) are made from an aluminium alloy.

18. A device according to any one of Claims 14 to 17, **characterised in that** a complementary mass (82) is arranged on the rim (72).

19. A device according to Claim 18, **characterised in that** the said complementary mass (82) is made from Inermet.

20. A device according to any one of Claims 14 to 19, **characterised in that** the said resonator (7) is symmetrical in relation to the point (10) of intersection of the axes XX and YY.

21. A device according to any one of Claims 1 to 20, **characterised in that** the said laminated elastomeric bearings (8) and (9) are each formed by two half bearings (8A, 8B) and (9A, 9B) respectively, whereof the outer reinforcing member is formed by the strengthened central zone (75) of the resonator (7) and the inner reinforcing member (43) is made from an appropriate metal.

22. A device according to Claim 21, **characterised in that** the laminated elastomeric half bearings (8A, 8B, 9A, 9B) are conical

23. A device according to either of Claims 21 and 22, **characterised in that** the laminated elastomeric half bearings (8A, 8B, 9A, 9B) are mounted with pre-tension in the reinforced zone (75) of the core (70) of the said resonator (7).

24. A device according to any one of Claims 1 to 23, **characterised in that** the said fixing means (80, 90) is a bolt.

25. A device according to any one of the preceding claims, **characterised in that** the said two parts correspond to two sections (5A, 6A) of a bar (100).

26. A device for suspending a gearbox (B) of a rotor aircraft;comprising a device according to one of Claims 1 - 25, the said gearbox (B) being counted between means of propulsion and a lifting rotor of the said aircraft, substantial longitudinally in relation to the axis (Z-Z) of the said rotor, and being suspended in relation to the fuselage (F) of the said aircraft, the said suspension device (D) including support bars (100) which are distributed radially around the said gearbox (B) and whereof the upper ends (101) are connected to the upper part (102) of the gearbox (B) and whereof the lower ends (103) are connected to the said fuselage (F), **characterised in that** at least some of the said support bars (100) are in the form of two sections (5A, 6A), and **in that** the said suspension device (D) includes, for each of the support bars (100) formed in this way, a device (1) such as that specified in any one of Claims 1 to 25 which is arranged between the said sections (5A, 6A) of the said support bar (100).

27. A device for suspending a gearbox (B) of a rotor aircraft comprising a device according to one of Claims 1 - 25, the said gearbox (B) being mounted between means of propulsion and a lifting rotor of the said aircraft, substantially longitudinally in relation to the axis (Z-Z) of the said rotor, and being suspended in relation to the fuselage (F) of the said aircraft, the said suspension device (D) including support bars (100) which are distributed radially around the said gearbox (B) and whereof the upper ends (101) are connected to the upper part (102) of the gearbox (B) and whereof the lower ends (103) are connected to the said fuselage (F), **characterised in that** it further includes for at least some of the said support bars in each case a device (1) such as that specified in any one of Claims 1 to 25 which is arranged at one end of the corresponding bar and which is intended to reduce the transmission of vibrations between this bar and the element to which this end of the bar is connected.

## Patentansprüche

1. Vorrichtung zur Filterung von Schwingungen zwischen zwei Bauteilen (2) und (3),
**dadurch gekennzeichnet, dass** sie aufweist:
- mindestens eine erste elastische Platine (4), die mit den Bauteilen (2) und (3) an zwei Befestigungspunkten (2A) bzw. (3A) verbunden ist, die eine geometrische Achse YY definieren, wobei die erste Platine (4) unter der Wirkung der von einem der Bauteile auf das andere Bauteil übertragenen Schwingungen lokal verformbar ist,
- mindestens einen ersten Resonator (7), der mit zwei laminierten Lagern aus Elastomermaterial (8, 9) ausgestattet ist, die einerseits eine geometrische Achse XX im Wesentlichen lotrecht zur geometrischen Achse YY definieren, wobei diese Achsen XX und YY sich in einem Punkt (10) kreuzen, und andererseits je ein Mittel (80, 90) zur Befestigung an der ersten elastischen Platine (4) aufnehmen, um den Resonator (7) bei der lokalen Verformung der ersten elastischen Platine (4) in eine oszillierende Drehung zu versetzen, damit der Resonator (7) eine schwingungshemmende Trägheits-Dyname erzeugt, die den Schwingungen entgegenwirkt und ihre Übertragung von einem Bauteil zum anderen filtert.

2. Vorrichtung nach Anspruch 1, **dadurch gekennzeichnet, dass** sie außerdem eine zweite elastische Platine (4) im Wesentlichen gleich der ersten elastischen Platine (4) aufweist, wobei diese erste und zweite elastische Platine (4) auf beiden Seiten des ersten Resonators (7) einander gegenüberliegen und mit dem Resonator (7) durch die Befestigungsmittel (80, 90) verbunden sind, die je von den laminierten Lagern aus Elastomermaterial (8, 9) getragen werden.

3. Vorrichtung nach Anspruch 1, **dadurch gekennzeichnet, dass** sie außerdem einen zweiten Resonator (7) im Wesentlichen gleich dem ersten Resonator (7) aufweist, wobei dieser erste und zweite Resonator (7) auf beiden Seiten der ersten Platine (4) einander gegenüberliegen und mit der ersten Platine (4) durch die Befestigungsmittel (80, 90) verbunden sind, die von den laminierten Lagern aus Elastomermaterial (8, 9) jedes der ersten und zweiten Resonatoren (7) getragen werden.

4. Vorrichtung nach einem der Ansprüche 1 bis 3, **dadurch gekennzeichnet, dass** die Platine (4) zwei äußere Arme (5) und (6) aufweist, die sich zwischen dem Befestigungspunkt (2A) und einer äußeren Spitze (20) des äußeren Arms (5) einerseits, dem Punkt (3A) und einer äußeren Spitze (30) des äußeren Arms (6) andererseits erstrecken.

5. Vorrichtung nach Anspruch 4, **dadurch gekennzeichnet, dass** die äußeren Arme (5, 6) in Höhe jedes Befestigungspunkts (2A, 3A) je als ein erster Gabelkopf (52, 62) ausgebildet sind, wobei jeder Gabelkopf (52, 62) eine Verbindungsachse mit dem entsprechenden Bauteil (2, 3) aufnimmt.

6. Vorrichtung nach einem der Ansprüche 4 oder 5, **dadurch gekennzeichnet, dass** die zwei äußeren Arme (5) und (6) über zwei erste elastische Verlängerungen (21) und (31) in der Ebene XX-YY verbunden sind, wobei die erste elastische Verlängerung (21) die Verbindung der äußeren Spitze (20) des äußeren Arms (5) mit einer inneren Spitze (32) des äußeren Arms (6) einerseits gewährleistet, und die zweite elastische Verlängerung (31) die Verbindung der äußeren Spitze (30) des äußeren Arms (6) mit einer inneren Spitze (22) des äußeren Arms (5) andererseits gewährleistet.

7. Vorrichtung nach Anspruch 6, **dadurch gekennzeichnet, dass** die zwei ersten elastischen Verlängerungen (21) und (31) für ein lokales Mehr an Flexibilität in den Zonen (21) und (31) sorgen, das je, mit Hilfe von parallel zueinander liegenden Schlitzen (57) und (67) hergestellt wird, die parallele Lamellen (58) und (68) begrenzen, die jede äußere Spitze (20, 30) jedes äußeren Arms mit der inneren Spitze (32, 22) des anderen Arms verbinden.

8. Vorrichtung nach Anspruch 7, **dadurch gekennzeichnet, dass** die Lamellen (58, 68) eine Richtung im Wesentlichen lotrecht zur Achse YY haben.

9. Vorrichtung nach Anspruch 7, **dadurch gekennzeichnet, dass** die Lamellen (58, 68) die gleiche Länge haben.

10. Vorrichtung nach den Ansprüchen 8 und 9, **dadurch gekennzeichnet, dass** die Lamellen (58, 68) an ihren jeweiligen äußeren Armen eingepasst sind.

11. Vorrichtung nach einem der Ansprüche 6 bis 10, **dadurch gekennzeichnet, dass** jeder äußere Arm (5, 6) eine zweite innere Verlängerung (50, 60) in der Ebene XX-YY aufweist, die zwischen jeder ersten elastischen Verlängerung (21, 31) liegt, wobei jede zweite innere Verlängerung wie ein Dreieck mit abgerundeter Spitze (51, 61) aussieht, wobei diese abgerundeten Spitzen kontaktlos einander gegenüber angeordnet sind, wodurch eine Öffnung (65) in der zentralen Zone (75) der Platine (4) festgelegt wird.

12. Vorrichtung nach Anspruch 11, **dadurch gekennzeichnet, dass** jede zweite innere Verlängerung (50, 60) in Höhe der abgerundeten Spitze (51, 61) in Form eines zweiten Gabelkopfs (53, 53) ausgebildet ist, wobei jeder der Gabelköpfe ein Verbindungsmittel (80, 90) der Platine (4) mit dem Resonator (7) aufnimmt.

13. Vorrichtung nach einem der Ansprüche 1 bis 12, **dadurch gekennzeichnet, dass** die Platine (4) bezüglich des Schnittpunkts (10) der Achsen XX und YY symmetrisch ist.

14. Vorrichtung nach einem der Ansprüche 1 bis 13, **dadurch gekennzeichnet, dass** der Resonator (7) einerseits einen Kern (70) mit einer länglichen Form in Richtung der geometrischen Achse XX und einer verdünnten Form in Richtung der geometrischen Achse YY und andererseits eine Felge (72) auf jeder Außenseite des Kerns aufweist.

15. Vorrichtung nach Anspruch 14, **dadurch gekennzeichnet, dass** der Kern (70) des Resonators (7) zwei Öffnungen (76) und (77) aufweist, die bezüglich der Achse XX symmetrisch und im Wesentlichen in Richtung der Achse XX länglich sind.

16. Vorrichtung nach einem der Ansprüche 14 bis 15, **dadurch gekennzeichnet, dass** der Resonator (7) in einer zentralen Zone (75) des Kerns (70) eine Verstärkung aufweist.

17. Vorrichtung nach einem der Ansprüche 14 bis 16, **dadurch gekennzeichnet, dass** der Kern (70) und die Felge (72) des Resonators (7) aus einer Aluminiumlegierung sind.

18. Vorrichtung nach einem der Ansprüche 14 bis 17, **dadurch gekennzeichnet, dass** eine komplementäre Masse (82) auf der Felge (72) angeordnet ist.

19. Vorrichtung nach Anspruch 18, **dadurch gekennzeichnet, dass** die komplementäre Masse (82) aus Inermet ist.

20. Vorrichtung nach einem der Ansprüche 14 bis. 19, **dadurch gekennzeichnet, dass** der Resonator (7) bezüglich des Schnittpunkts (10) der Achsen XX und YY symmetrisch ist.

21. Vorrichtung nach einem der Ansprüche 1 bis 20, **dadurch gekennzeichnet, dass** die laminierten Lager aus Elastomermaterial (8) und (9) je aus zwei Halblagern (8A, 8B) und (9A, 9B) bestehen, deren Außenbeschlag aus der zentralen verstärkten Zone (75) des Resonators (7) besteht und der Innenbeschlag (43) aus einem geeigneten Metall ist.

22. Vorrichtung nach Anspruch 21, **dadurch gekennzeichnet, dass** die laminierten Halblager aus Elastomermaterial (8A, 8B, 9A, 9B) kegelförmig sind.

23. Vorrichtung nach einem der Ansprüche 21 bis 22, **dadurch gekennzeichnet, dass** die laminierten Halblager aus Elastomermaterial (8A, 8B, 9A, 9B) mit einer Vorspannung in die verstärkte Zone (75) des Kerns (70) des Resonators (7) montiert werden.

24. Vorrichtung nach einem der Ansprüche 1 bis 23, **dadurch gekennzeichnet, dass** das Befestigungsmittel (80, 90) ein Bolzen ist.

25. Vorrichtung nach einem der vorhergehenden Ansprüche, **dadurch gekennzeichnet, dass** die zwei Bauteile zwei Abschnitten (5A, 6A) einer Stange (100) entsprechen.

26. Aufhängevorrichtung eines Getriebegehäuses (B) eines Drehflügelflugzeugs, die eine Vorrichtung nach einem der Ansprüche 1 bis 25 aufweist, wobei das Getriebegehäuse (B) zwischen Antriebsmitteln und einem Auftriebsrotor des Luftfahrzeugs im Wesentlichen längs zur Achse (Z-Z) des Rotors montiert und bezüglich des Rumpfs (F) des Luftfahrzeugs aufgehängt ist, wobei die Aufhängevorrichtung (D) Auflagestangen (100) aufweist, die radial um das Getriebegehäuse (B) verteilt sind, deren obere Enden (101) mit dem oberen Teil (102) des Getriebegehäuses (B) und deren untere Enden (103) mit dem Rumpf (F) verbunden sind, **dadurch gekennzeichnet, dass** zumindest manche der Auflagestangen (100) aus zwei Abschnitten (5A, 6A) geformt sind, und dass die Aufhängevorrichtung (D) für jede der so geformten Auflagestangen (100) eine Vorrichtung (1) wie diejenige aufweist, die in einem der Ansprüche 1 bis 25 spezifiziert ist, die zwischen den Abschnitten (5A, 6A) der Auflagestange (100) angeordnet ist.

27. Aufhängevorrichtung eines Getriebegehäuses (B) eines Drehflügelflugzeugs, die eine Vorrichtung nach einem der Ansprüche 1 bis 25 aufweist, wobei das Getriebegehäuse (B) zwischen Antriebsmitteln und einem Auftriebsrotor des Luftfahrzeugs im Wesentlichen längs zur Achse (Z-Z) des Rotors montiert und bezüglich des Rumpfs (F) des Luftfahrzeugs aufgehängt ist, wobei die Aufhängevorrichtung (D) Auflagestangen (100) aufweist, die radial um das Getriebegehäuse (B) verteilt sind, deren obere Enden (101) mit dem oberen Teil (102) des Getriebegehäuses (B) und deren untere Enden (103) mit dem Rumpf (F) verbunden sind, **dadurch gekennzeichnet, dass** sie außerdem zumindest für manche der Auflagestangen jeweils eine Vorrichtung (1) wie diejenige aufweist, die in einem der Ansprüche 1 bis 25 spezifiziert ist, die an einem Ende der entsprechenden Stange angeordnet und dazu bestimmt ist, die Übertragung der Schwingungen zwischen dieser Stange und dem Element zu verringern, mit dem dieses Ende der Stange verbunden ist.
